# EUROPEAN PATENT APPLICATION

(11) **EP 2 523 507 A1**
(43) Date of publication of application: **14.11.2012**
(21) Application number: 11305569.3
(22) Date of filing: 11.05.2011
(51) Int. Cl.: H04W 52/02

(54) **Method for triggering wake-up of dormant base station(s) located in the vicinity of a mobile communication equipment, and associated network entities**

(71) Applicant: Alcatel Lucent, 75007 Paris (FR)
(72) Inventor: Conte, Alberto, 91620 NOZAY (FR); Orlandi, Barbara, 91620 NOZAY (FR)
(74) Representative: El Manouni, Josiane

(57) **Abstract**

A method aims at triggering wake-up of at least one base station (BS) of a wireless communication network. This method comprises the following steps: (i) transmitting first data representative of the location of a mobile communication equipment (UE) from the latter (UE) towards a first network entity (NE1), (ii) determining at least one base station (BS) set in a dormant mode and located in the radio vicinity of this mobile communication equipment (UE), by means of this first network entity (NE1), and (iii) triggering a wake-up procedure of each determined base station (BS) and sending at least information defining each determined base station (BS) to the mobile communication equipment (UE), for access purpose.

## Description

The present invention relates to wireless communication networks, and more precisely to the wake-up triggering of base stations of such networks.

### BACKGROUND ART

As it is known by those skilled in the art, some wireless communication networks comprise base stations that may be switched from a normal consumption mode (or active (or running) mode), in which they may both transmit and receive data, to a low consumption mode (or "stand-by" (or else dormant) mode), in which they cannot transmit and/or receive data.

Actually, base station standby mode is poorly and partially implemented. Indeed, this is only the case in:
- some cellular macro base stations which may enter/exit standby mode as a function of a static configured pattern (like day/night),
- some cellular base stations which may enter/exit standby mode for maintenance or failure detection reasons, and
- some WLAN access points (of WiFi networks) which can enter into a receive-only mode (where data transmission is forbidden while data reception is authorized). In this case, WiFi mobile communication equipments regularly send "probe" messages indicating the SSID ("Service Set IDentifier") of the WLAN access point they would like to connect to, and if this WLAN access point hears such a probe message it then automatically passes into a send-receive (active) mode (where both data transmission and data reception are authorized).

### SUMMARY

In the case of cellular base stations, mobile communication equipments cannot detect the ones that are in their radio vicinity when they are in dormant mode according to their static configured patterns. So, they cannot switch them from their dormant mode to their running mode when they decide to benefit from the wireless access they offer.

In the case of WLAN access points, mobile communication equipments have to constantly emit probe messages, and therefore they not only waste and consume energy, but also create interferences. Moreover this solution does not concern cellular networks, such as 3G networks or LTE networks, for instance.

So, there is a need for triggering a wake-up procedure of a dormant base station when a mobile communication equipment appears to be in its radio vicinity.

This is notably the case, for instance, in initial LTE deployments during which there are only a few LTE hotspots and potentially only a few first users (i.e. few LTE-enabled devices/subscribers). Indeed energy savings could be obtained by setting a LTE hotspot in its running mode only when a LTE-capable mobile communication equipment is in its radio coverage.

This is also the case, for instance, in residential or enterprise femtocells where only a limited and well defined number of users are allowed to connect their mobile communication equipments to them.

This is also the case, for instance, in low-populated areas, like desert areas, in which it would be of interest to set a LTE hotspot in its running mode only when a mobile communication equipment arrives in its radio coverage.

So, some embodiments of the invention aim at allowing a triggering of the wake-up of at least one base station of a wireless communication network.

An embodiment of the invention consists in a method which may comprise the steps:
(i) transmitting first data representative of the location of a mobile communication equipment from the latter towards a first network entity,
(ii) determining at least one base station set in a dormant mode and located in the radio vicinity of this mobile communication equipment, by means of the first network entity, and
(iii) triggering a wake-up procedure of each determined base station and sending at least information defining each determined base station to the mobile communication equipment, for access purpose.

This method may include additional characteristics considered separately or combined, and notably:
- during step (iii) the information may be transmitted by the first network entity to the mobile communication equipment;
- during step (iii) information defining cell(s) and/or network(s) including the (each) determined base station may be also sent to the mobile communication equipment;
- in a first family of embodiments, it is the mobile communication equipment that may trigger the wake-up procedure during step (iii);
   ➢ during step (iii) the mobile communication equipment may trigger the wake-up procedure by means of a dedicated message transmitted directly to each determined base station;
   ➢ in a variant, during step (iii) the mobile communication equipment may trigger the wake-up procedure by means of a dedicated message transmitted to a second network entity that manages the wake-up procedure;
- in a second family of embodiments, it is the first network entity that may trigger the wake-up procedure during step (iii);
   ➢ during step (iii) the first network entity may trigger the wake-up procedure by means of a dedicated message transmitted directly to each determined base station;
   ➢ during step (iii) the first network entity may transmit the information to the mobile communication equipment after having been informed of the complete wake-up of each determined base station;
   ➢ in a variant, during step (iii) the first network entity may trigger the wake-up procedure by means of a dedicated message, transmitted to a second network entity which manages wake-up procedures, and requiring wake-up of each determined base station;
      ● during step (iii) the first network entity may transmit the information to the mobile communication equipment after having been informed of the complete wake-up of each determined base station by the second network entity;
- during step (i) the first data may be transmitted by means of a 3GPP OMA-DM (Open Mobile Alliance - Device Management) based ANDSF (Access Network Discovery and Selection Function) signaling protocol message with or without an extension, or an IEEE 802.21 message with or without an extension, and during step (iii) the information may be transmitted by means of an extended 3GPP OMA-DM based ANDSF signaling protocol message [here, the model used in the reply must be extended to be able to specify discovery information of dormant 3GPP base stations - current model for non-3GPP networks is sufficient for dormant non-3GPP base stations if the mobile communication equipment does not need to perform the wake-up procedure itself; if the mobile communication equipment has to perform the wake-up procedure then current non-3GPP access discovery information needs an extension flag to indicate base stations/access points that are in dormant mode], the same applies to the case of an IEEE 802.21 message.

Another embodiment of the invention consists in a first network entity which may be arranged, upon receipt of first data representative of the location of a mobile communication equipment from the latter, for determining at least one base station of a communication network, set in a dormant mode and located in the radio vicinity of this mobile communication equipment, and for sending at least information defining each determined base station to this mobile communication equipment, for access purpose once it has been woken-up.

This first network entity may include additional characteristics considered separately or combined, and notably:
- it may be arranged for triggering a wake-up procedure of each determined base station;
   ➢ it may be arranged for triggering the wake-up procedure by means of a dedicated message transmitted directly to each determined base station;
      ● it may be arranged for transmitting the information to the mobile communication equipment after having been informed of the complete wake-up of each determined base station;
   ➢ it may be arranged for triggering the wake-up procedure by means of a dedicated message, transmitted to another network entity which manages wake-up procedures, and requiring wake-up of each determined base station;
      ● it may be arranged for transmitting the information to the mobile communication equipment after having been informed of the complete wake-up of each determined base station by the second network entity.

Still another embodiment of the invention consists in a second network entity which may be arranged, upon receipt of a message requiring wake-up of at least one base station of a communication network, set in a dormant mode and located in the radio vicinity of a mobile communication equipment, for waking-up each base station to allow the mobile communication equipment to access to it.

### BRIEF DESCRIPTION OF THE DRAWING

Other features and advantages of the invention will become apparent on examining the detailed specifications hereafter and the appended drawings, wherein:

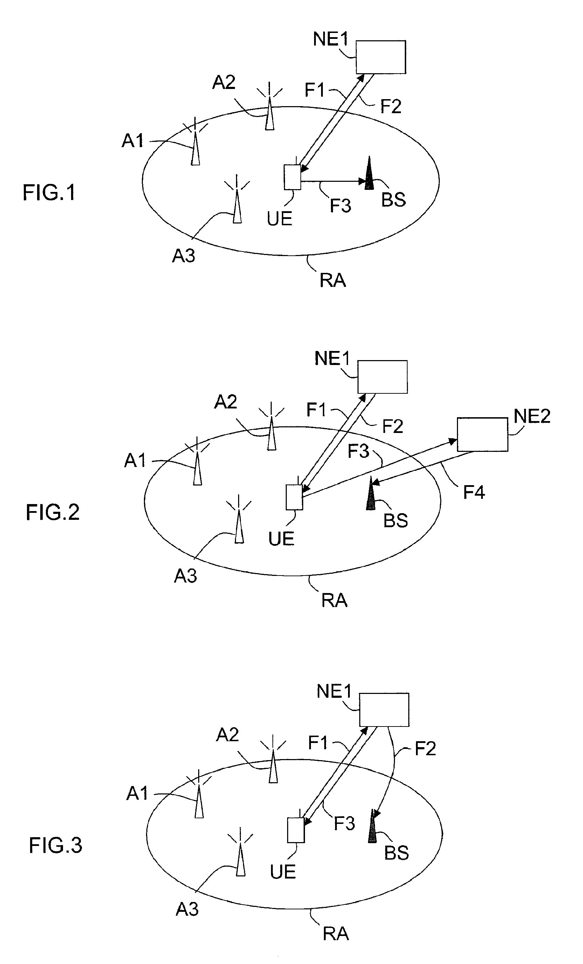

- figure 1 schematically illustrates, on the one hand, a mobile communication equipment, with its radio coverage area including three wireless access equipments and a dormant base station to be woken-up, and a network entity that may be joined by the mobile communication equipment, and on the other hand, arrows representing steps or sub steps of a first example of embodiment of a method according to an aspect of the invention,
- figure 2 schematically illustrates, on the one hand, a mobile communication equipment, with its radio coverage area including three wireless access equipments and a dormant base station to be woken-up, and first and second network entities that may be joined by the mobile communication equipment, and on the other hand, arrows representing steps or sub steps of a second example of embodiment of a method according to an aspect of the invention,
- figure 3 schematically illustrates, on the one hand, a mobile communication equipment, with its radio coverage area including three wireless access equipments and a dormant base station to be woken-up, and a network entity that may be joined by the mobile communication equipment and may join the dormant base station, and on the other hand, arrows representing steps or sub steps of a third example of embodiment of a method according to an aspect of the invention,

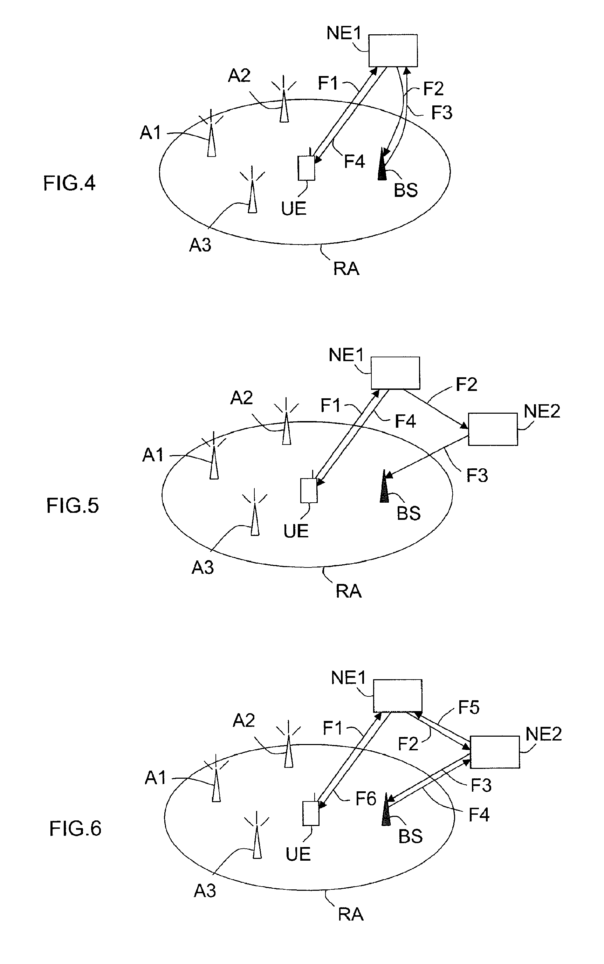

- figure 4 schematically illustrates, on the one hand, a mobile communication equipment, with its radio coverage area including three wireless access equipments and a dormant base station to be woken-up, and a network entity that may be joined by the mobile communication equipment and may join the dormant base station, and on the other hand, arrows representing steps or sub steps of a fourth example of embodiment of a method according to an aspect of the invention,
- figure 5 schematically illustrates, on the one hand, a mobile communication equipment, with its radio coverage area including three wireless access equipments and a dormant base station to be woken-up, a first network entity that may be joined by the mobile communication equipment, and a second network entity that may be joined by the first network entity and may join the dormant base station, and on the other hand, arrows representing steps or sub steps of a fifth example of embodiment of a method according to an aspect of the invention, and
- figure 6 schematically illustrates, on the one hand, a mobile communication equipment, with its radio coverage area including three wireless access equipments and a dormant base station to be woken-up, a first network entity that may be joined by the mobile communication equipment, and a second network entity that may be joined by the first network entity and may join the dormant base station, and on the other hand, arrows representing steps or sub steps of a sixth example of embodiment of a method according to an aspect of the invention.

The appended drawings may serve not only to complete the invention, but also to contribute to its definition, if need be.

### DETAILED DESCRIPTION

Embodiments of the invention aim at providing a method and associated network entities (NE1 and NE2) intended for allowing wake-up triggering of base station(s) (BS) of a wireless communication network that is (are) in the radio vicinity (or coverage) of mobile communication equipments (UE).

As illustrated in figures 1 to 6, in the following description, it will be considered, as example, that the mobile communication equipment UE, hereafter called user equipment, has a radio coverage area RA which includes temporarily three wireless access equipments Ai (i = 1 to 3) and a dormant base station BS that may be switched from a normal consumption mode (or active (or running) mode), in which it may both transmit and receive data, to a low consumption mode (or "standby" (or else dormant) mode), in which it cannot transmit and/or receive data. But, it may happen that this radio coverage area RA includes more or less than three wireless access equipments Ai as well as more than one dormant base station.

Moreover, in the following description, it will be considered, as example, that the wireless access equipments Ai belong to access networks having different radio access technologies (for instance, A1 designates a WiFi access point, A2 designates a 3G cell, and A3 designates a LTE cell). But, the wireless access equipments Ai could belong to access networks having the same radio access technology.

More, in the following description, it will be considered, as example, that the base station BS belongs to an UMTS or LTE access network. But the invention is not limited to these types of wireless access network. Indeed, the invention concerns any base station that may be part of a wireless access network (and notably WiFi, WiMAX, 3GPP2 and LTE-Advanced).

More, in the following description, it will be considered, as example, that the user equipment UE is a mobile (or cellular) phone, for instance of the smartphone type. But, the invention is not limited to this type of user equipment. Indeed, the invention concerns any type of mobile communication equipment that is capable of exchanging data through at least one wireless access network. So, it could also be a laptop (or portable computer), a personal digital assistant, a digital tablet/pad, a sensor equipped with wireless communication capabilities, a consumer equipment like a photo camera equipped with wireless communication capabilities, any sort of wireless-communicating machines such as vending machines, or a portable game console, for instance.

As mentioned above, an embodiment of the invention consists in a method intended for triggering wake-up of at least one dormant base station BS (of a wireless communication network) that is located in the radio coverage area RA of a mobile communication (or user) equipment UE.

Such a method may comprise three main steps (i), (ii) and (iii).

A first main step (i) consists in transmitting first data representative of the location of a user equipment UE from the latter (UE) towards a first network entity NE1.

One means here by "first network entity (NE1)" a network equipment or element that is capable of implementing one or more functions, and notably a base station determination, but also possibly an assistance for base station wake-up. So, it may be made of electronic circuit(s) or hardware modules, or of a combination of hardware and software modules, or else of software modules. In the case where the first network entity NE1 is made of software modules it can be stored in a memory of a processor or in any computer software product. For instance the first network entity NE1 may be part of an ANDSF server, a radio network controller (or RNC) or any equivalent equipment in 3GPP2, PCRF, MME/SGSN, Point of Service 802.21 (MIH server), Femto Gateway.

For instance, the first data may be the GPS coordinates of the user equipment UE and/or identifier(s) of cell(s) and/or access network(s) the user equipment UE senses (or detects). This first data could also be refined and/or augmented by auxiliary data representative of the network knowledge.

Also for instance, during step (i) the first data may be transmitted by the user equipment UE towards the first network entity NE1 by means of a 3GPP OMA-DM (Open Mobile Alliance - Device Management) based ANDSF (Access Network Discovery and Selection Function) signaling protocol message, or a IEEE 802.21 message (i.e. an MIH message (Media Independent Handover message)). It is recalled that the ANDSF function is defined by the 3GPP technical specifications TS 23.402, TS 24.302 and TS 24.312. ln a variant the first data could be transmitted by means of a new dedicated message or protocol).

One means here by "extended version" a version of a signaling protocol message to which has been added a field for requiring determination of a neighbour base station BS that could be switched from its dormant mode to a running (or active) mode.

The message comprising the first data may be transmitted to the first network entity NE1 through any wireless access equipment Ai with which the user equipment UE may establish a connection, and which, of course, provides access to this first network entity NE1. This is notably the case when an ANDSF message is used, because ANDSF communications go above IP layer and are of the end-to-end type.

The first main step (i) may be, for instance, implemented periodically by the user equipment UE, and/or based on location changes and/or traffic needs (i.e. when the available connectivity through wireless access equipment Ai is not enough to transport all needed data).

A second main step (ii), of the method, consists in determining (if it exists) at least one base station BS that is set in a dormant mode and located in the radio vicinity (i.e. in the radio coverage area RA) of the user equipment UE that has sent the first data during the first main step (i). This determination is carried out by the first network entity NE1.

For instance, the first network entity NE1 maintains a "map" (or table) that stores locations of base stations BS (and other wireless access equipments Ai) of available networks in correspondence with information about the mode status of at least these base stations BS (e.g. dormant mode, running (or active) mode, off mode, maintenance mode). This information about the mode status should be dynamically updated. With such a map (or table), given the user equipment location, the first network entity NE1 is able to determine any dormant base station BS located in the radio vicinity of this user equipment UE. For the case where the wake-up procedure should be initiated by the user equipment UE, then the network entity NE1 does not necessarily need to store the dynamic mode status of the base stations. Knowing that a base station is capable of being in dormant mode would be sufficient.

A third main step (iii), of the method, consists in triggering a wake-up procedure of each determined base station BS and sending at least information defining each determined base station BS to the user equipment UE, for access purpose.

This base station information is preferably transmitted by the first network entity NE1 to the concerned user equipment UE, because it has been determined by this first network entity NE1.

This transmitted base station information may be also augmented by information defining cell(s) and/or network(s) that include(s) each determined base station BS.

It is important to note that a wake-up procedure is triggered only if the user equipment UE is allowed or able to connect to a determined base station BS. So, a checking must be carried out into the user databases of the operators before triggering a wake-up procedure.

The wake-up procedure may be triggered either by the user equipment UE or by the first network entity NE1 depending on the chosen embodiment of the invention. Six examples of embodiment are described hereafter with reference to figures 1 to 6, respectively. The two first examples of embodiment belong to a first family dedicated to triggering by the user equipment UE, while the four other examples of embodiment belong to a second family dedicated to triggering by the first network entity NE1.

In the first example of embodiment illustrated in figure 1, the user equipment UE transmits first data (representative of its location) to the first network entity NE1 (arrow F1). Then, the first network entity NE1 determines at least one base station BS set in a dormant mode and located in the radio vicinity of the user equipment UE and sends at least information defining each determined base station BS to the user equipment UE (arrow F2). This base station information may include data representative of the status mode (i.e. dormant) of each determined base station BS. For instance, the base station information is transmitted into a dedicated message which may be an extended version of a 3GPP OMA-DM based ANDSF signaling protocol message or an IEEE 802.21 message (MIH message). But, in a variant it could be also a new dedicated message or protocol. Finally, the user equipment UE triggers a wake-up procedure for each determined base station BS (arrow F3). In this first example, the triggering is done by means of a dedicated message that is transmitted directly to each determined base station BS. This last dedicated message may be sent to each determined base station BS by any technique known by the man skilled in the art, and notably by means of a dedicated channel or through a satellite communication, for instance, with a specific message carried through an available connection (wireless access point Ai).

In the second example of embodiment illustrated in figure 2, the user equipment UE transmits first data (representative of its location) to the first network entity NE1 (arrow F1). Then, the first network entity NE1 determines at least one base station BS set in a dormant mode and located in the radio vicinity of the user equipment UE and sends at least information defining each determined base station BS to the user equipment UE (arrow F2). This base station information may include data representative of the status mode (i.e. dormant) of each determined base station BS. For instance, the base station information is transmitted into a dedicated message which may be an extended version of a 3GPP OMA-DM based ANDSF signaling protocol message or an IEEE 802.21 message (MIH message). But, in a variant it could be also a new dedicated message or protocol. Then, the user equipment UE triggers a wake-up procedure for each determined base station BS (arrow F3). In this second example, the triggering is done by means of a dedicated message that is transmitted to a second network entity NE2 that manages the wake-up procedure (arrow F3). When this second network entity NE2 receives this last dedicated message (which comprises base station information), it triggers the wake-up procedure of each base station BS (arrow F4). This wake-up procedure may be carried out by means of any technique known by the man skilled in the art, and notably by means of a dedicated channel or through a satellite communication, for instance, with a specific message carried through an available connection (wireless access point Ai).

One means here by "second network entity (NE2)" a network equipment or element that is capable of implementing one or more functions, and notably a base station wake-up procedure. So, it may be made of electronic circuit(s) or hardware modules, or of a combination of hardware and software modules, or else of software modules. In the case where the second network entity NE2 is made of software modules it can be stored in a memory of a processor or in any computer software product. For instance the second network entity NE2 may be part of a server, possibly a dedicated one, a radio network controller (or RNC), a MME/SGSN or a Femto Gateway.

In the third example of embodiment illustrated in figure 3, the user equipment UE transmits first data (representative of its location) to the first network entity NE1 (arrow F1). Then, the first network entity NE1 determines at least one base station BS set in a dormant mode and located in the radio vicinity of the user equipment UE and may send at least information defining each determined base station BS to the user equipment UE (arrow F2). This base station information may include data representative of the status mode (i.e. dormant) of each determined base station BS. For instance, the base station information is transmitted into a dedicated message which may be an extended version of a 3GPP OMA-DM based ANDSF signaling protocol message or an IEEE 802.21 message (MIH message). But, in a variant it could be also a new dedicated message or protocol. Finally, the first network entity NE1 triggers a wake-up procedure for each determined base station BS (arrow F3). In this third example, the triggering is done by means of a dedicated message that is transmitted directly to each determined base station BS. So, in this example the first network entity NE1 manages the wake-up procedure. The wake-up procedure may be carried out by means of any technique known by the man skilled in the art, and notably by means of a dedicated channel or through a satellite communication, for instance, with a specific message carried through an available connection (wireless access point Ai).

It is important to note that in this third example the first network entity NE1 may first trigger the wake-up procedure before transmitting the base station information to the user equipment UE. Moreover, when the base station information include data representative of the base station status mode, the user equipment UE is informed of the dormant status of each determined base station BS. So, it can, for instance, either wait a predefined time before trying to connect to a determined base station BS, or continue scanning frequencies till it detects a newly woken-up base station BS.

In the fourth example of embodiment illustrated in figure 4, the user equipment UE transmits first data (representative of its location) to the first network entity NE1 (arrow F1). Then, the first network entity NE1 determines at least one base station BS set in a dormant mode and located in the radio vicinity of the user equipment UE. Then, the first network entity NE1 triggers a wake-up procedure for each determined base station BS (arrow F2). In this fourth example, the triggering is done by means of a dedicated message that is transmitted directly to each determined base station BS. So, in this example the first network entity NE1 manages the wake-up procedure. The wake-up procedure may be carried out by means of any technique known by the man skilled in the art, and notably by means of a dedicated channel or through a satellite communication, for instance, with a specific message carried through an available connection (wireless access point Ai). When a base station BS is woken-up, it sends a confirmation message to the first network entity NE1 (arrow F3). Finally, the first network entity NE1 transmits at least information defining each determined base station BS to the user equipment UE after having been informed of the complete wake-up of a base station BS (arrow F4). This base station information does not need to include a data representative of the status mode because the base station BS is now in its active (or running) mode. For instance, the base station information is transmitted into a dedicated message which may be an extended version of a 3GPP OMA-DM based ANDSF signaling protocol message or an IEEE 802.21 message (MIH message). But, in a variant it could be also a new dedicated message or protocol.

In the fifth example of embodiment illustrated in figure 5, the user equipment UE transmits first data (representative of its location) to the first network entity NE1 (arrow F1). Then, the first network entity NE1 determines at least one base station BS set in a dormant mode and located in the radio vicinity of the user equipment UE. Then, the first network entity NE1 may trigger a wake-up procedure for each determined base station BS (arrow F2). In this fifth example, the triggering is done by means of a dedicated message that is transmitted to a second network entity NE2 that manages the wake-up procedure and that has been described above (arrow F2). When this second network entity NE2 receives this last dedicated message (which comprises base station information), it controls the wake-up procedure of each base station BS (arrow F3). The wake-up procedure may be carried out by means of any technique known by the man skilled in the art, and notably by means of a dedicated channel or through a satellite communication, for instance, with a specific message carried through an available connection (wireless access point Ai). Then, the first network entity NE1 transmits at least information defining each determined base station BS to the user equipment UE (arrow F4). This base station information may include a data representative of the status mode (i.e. dormant mode) because it does not know if a base station BS is effectively in its active (or running) mode. For instance, the base station information is transmitted into a dedicated message which may be an extended version of a 3GPP OMA-DM based ANDSF signaling protocol message or an IEEE 802.21 message (MIH message). But, in a variant it could be also a new dedicated message or protocol.

It is important to note that in this fifth example the first network entity NE1 may first transmit the base station information to the user equipment UE before triggering the wake-up procedure. Moreover, when the base station information include data representative of the base station status mode, the user equipment UE is informed of the dormant status of each determined base station BS. So, it can, for instance, either wait a predefined time before trying to connect to a determined base station BS, or continue scanning frequencies till it detects a newly woken-up base station BS.

In the sixth example of embodiment illustrated in figure 6, the user equipment UE transmits first data (representative of its location) to the first network entity NE1 (arrow F1). Then, the first network entity NE1 determines at least one base station BS set in a dormant mode and located in the radio vicinity of the user equipment UE. Then, the first network entity NE1 may trigger a wake-up procedure for each determined base station BS (arrow F2). In this fifth example, the triggering is done by means of a dedicated message that is transmitted to a second network entity NE2 that manages the wake-up procedure and that has been described above (arrow F2). When this second network entity NE2 receives this last dedicated message (which comprises base station information), it controls the wake-up procedure of each base station BS (arrow F3). The wake-up procedure may be carried out by means of any technique known by the man skilled in the art, and notably by means of a dedicated channel or through a satellite communication, for instance, with a specific message carried through an available connection (wireless access point Ai). When a base station BS is woken-up, it sends a confirmation message to the second network entity NE2 (arrow F4). Then, the second network entity NE2 transmits a message to the first network entity NE1 to confirm that each determined base station BS is now in its active (or running) mode (arrow F5). Finally, the first network entity NE1 transmits at least information defining each determined base station BS to the user equipment UE after having been informed of the complete wake-up of each base station (arrow F6). This base station information does not need to include a data representative of the status mode because each base station BS is now in its active (or running) mode. For instance, the base station information is transmitted into a dedicated message which may be an extended version of a 3GPP OMA-DM based ANDSF signaling protocol message or an IEEE 802.21 message (MIH message). But, in a variant it could be also a new dedicated message or protocol.

The invention offers several advantages, and notably:
- it may be implemented in multi-radio access technologies (such as, for instance, 3G, LTE, WiFi, WiMAX). For instance, the user equipment UE can use a first radio access technology (for instance WiFi) to connect to the first NE1 or second NE2 network entity to wake-up a dormant base station BS connected to a second radio access technology (for instance 3G);
- it may be implemented in multi-operator environments. For instance, the user equipment UE can use a 3G connection provided by a first operator to contact the first NE1 or second NE2 network entity to wake-up a dormant base station BS operated by a second operator;
- it allows also pre-loading in advance a map of available (and possibly dormant) base stations that the user will then wake-up once he is in their respective radio vicinity. This may be useful when an area comprises a few isolated hotspots, without a continuous coverage;
- it may be implemented in a cellular infrastructure;
- it allows a real dynamic on/off switching operation that a fixed configured pattern based on day/night cannot offer.

The invention is not limited to the embodiments of method, mobile communication equipment, first network entity, and second network entity described above, only as examples, but it encompasses all alternative embodiments which may be considered by one skilled in the art within the scope of the claims hereafter.

## Claims

1. Method for triggering wake-up of at least one base station (BS) of a wireless communication network, wherein it comprises the steps: (i) transmitting first data representative of the location of a mobile communication equipment (UE) from the latter (UE) towards a first network entity (NE1), (ii) determining at least one base station (BS) set in a dormant mode and located in the radio vicinity of said mobile communication equipment (UE), by means of said first network entity (NE1), and (iii) triggering a wake-up procedure of each determined base station (BS) and sending at least information defining each determined base station (BS) to said mobile communication equipment (UE), for access purpose.

2. Method according to claim 1, wherein during step (iii) said information is transmitted by said first network entity (NE1) to said mobile communication equipment (UE).

3. Method according to any one of claims 1 and 2, wherein during step (iii) said mobile communication equipment (UE) triggers said wake-up procedure.

4. Method according to claim 3, wherein during step (iii) said mobile communication equipment (UE) triggers said wake-up procedure by means of a dedicated message transmitted directly to each determined base station (BS).

5. Method according to claim 3, wherein during step (iii) said mobile communication equipment (UE) triggers said wake-up procedure by means of a dedicated message transmitted to a second network entity (NE2) that manages said wake-up procedure.

6. Method according to any one of claims 1 and 2, wherein during step (iii) said first network entity (NE1) triggers said wake-up procedure.

7. Method according to claim 6, wherein during step (iii) said first network entity (NE1) triggers said wake-up procedure by means of a dedicated message transmitted directly to each determined base station (BS).

8. Method according to any one of claims 6 and 7, wherein during step (iii) said first network entity (NE1) transmits said information to said mobile communication equipment (UE) after having been informed of the complete wake-up of each determined base station (BS).

9. Method according to claim 6, wherein during step (iii) said first network entity (NE1) triggers said wake-up procedure by means of a dedicated message, transmitted to a second network entity (NE2) which manages wake-up procedures, and requiring wake-up of each determined base station (BS).

10. Method according to claim 9, wherein during step (iii) said first network entity (NE1) transmits said information to said mobile communication equipment (UE) after having been informed of the complete wake-up of each determined base station (BS) by said second network entity (NE2).

11. Method according to any one of claims 1 to 10, wherein during step (i) said first data are transmitted by means of a 3GPP OMA-DM based ANDSF signaling protocol message with or without extension, and during step (iii) said information is transmitted by means of an extended 3GPP OMA-DM based ANDSF signaling protocol message.

12. Method according to any one of claims 1 to 10, wherein during step (i) said first data are transmitted by means of an IEEE 802.21 message with or without extension, and during step (iii) said information is transmitted by means of an extended IEEE 802.21 message.

13. Network entity (NE1), wherein it is arranged, upon receipt of first data representative of the location of a mobile communication equipment (UE) from the latter (UE), for determining at least one base station (BS) of a communication network, set in a dormant mode and located in the radio vicinity of said mobile communication equipment (UE), and for sending at least information defining each determined base station (BS) to said mobile communication equipment (UE), for access purpose once it (BS) has been woken-up.

14. Network entity according to claim 13, wherein it is arranged for triggering a wake-up procedure of each determined base station (BS).

15. Network entity according to claim 14, wherein it is arranged for triggering said wake-up procedure by means of a dedicated message transmitted directly to each determined base station (BS).

16. Network entity according to claim 14, wherein it is arranged for triggering said wake-up procedure by means of a dedicated message, transmitted to another network entity (NE2) which manages wake-up procedures, and requiring wake-up of each determined base station (BS).

17. Network entity (NE2), wherein it is arranged, upon receipt of a message requiring wake-up of at least one base station (BS) of a communication network, set in a dormant mode and located in the radio vicinity of a mobile communication equipment (UE), for waking-up each base station (BS) to allow said mobile communication equipment (UE) to access to it (BS).
